# EUROPEAN PATENT SPECIFICATION

(11) **EP 0 600 086 B1**
(45) Date of publication and mention of the grant of the patent: **02.06.1999**
(21) Application number: 92916824.3
(22) Date of filing: 11.08.1992
(51) Int. Cl.: B29C 45/00, C08F 32/08, C08L 45/00, G11B 7/24, C08G 61/08

(54) **INJECTION-MOLDED THERMOPLASTIC SATURATED NORBORNENE RESIN, SUBSTRATE OF INFORMATION MEDIUM ELEMENT MADE THEREFROM, AND INFORMATION MEDIUM ELEMENT**
SPRITZGEGOSSENES THERMOPLASTISCHES GESÄTTIGTES NORBORNENHARZ, DARAUS HERGESTELLTES SUBSTRAT EINES INFORMATIONSTRÄGERELEMENTES UND INFORMATIONSTRÄGERELEMENT
RESINE DE NORBORNENE SATUREE AUX THERMOPLASTIQUES, OBTENUES PAR MOULAGE PAR INJECTION, SUBSTRAT DE SUPPORT D'INFORMATIONS FABRIQUE AVEC UNE TELLE RESINE, ET SUPPORT D'INFORMATIONS

(30) Priority: 12.08.1991 JP 225284/91
(43) Date of publication of application: 08.06.1994
(73) Proprietor: NIPPON ZEON CO., LTD., Tokyo 100 (JP)
(72) Inventor: TAKAHASHI, Nobukazu, Yokohama-shi, Kanagawa 247 (JP); KOHARA, Teiji, Kawasaki-shi, Kanagawa 216 (JP); NATSUUME, Tadao, Yokosuka-shi, Kanagawa 239 (JP)
(74) Representative: O'Brien, Caroline Jane
(86) International application number: JP9201027
(87) International publication number: WO9303906

(56) References cited:
- EP-A- 0 405 843
- JP-A- 2 029 308
- JP-A-61 188 444
- JP-A-62 181 323
- DATABASE WPI Week 8946, Derwent Publications Ltd., London, GB; AN 89-335733 & JP-A-1 249 388 (MITSUI PETROCHEM. IND.) 4 October 1989
- DATABASE WPI Week 9109, Derwent Publications Ltd., London, GB; AN 91-062727 & JP-A-3 012 448 (NIPPON ZEON) 21 January 1991
- DATABASE WPI Week 9109, Derwent Publications Ltd., London, GB; AN 91-062841 & JP-A-3 012 835 (NIPPON ZEON) 21 January 1991
- CARL HANSER VERLAG, no. 24, MÜNCHEN WIEN, page 85 SAECHTLING 'Kunststoff Taschenbuch'

## Description

### TECHNICAL FIELD

This invention relates to an article of thermoplastic saturated norbornene type resin according to the preamble of claim 1, to an information medium element substrates, and to a method of making an article of thermoplastic saturated norbornene-type resin.

### TECHNICAL BACKGROUND

In information recording elements such as photo memory card substrates and information medium elements such as information displaying elements, e.g. liquid crystal displays, the incident light and reflected light must be constantly refracted and reflected without irregular reflection in order to assure the reliability of information input and output by light. For this purpose, the surface of information medium elements is required to be flat and smooth, and their thickness uniform.

Glass plates having a ground surface have been used. Glass plates, however, have a fault in that they are brittle, readily breakable and weighty. Thus, transparent thermoplastics are sometimes used in place of glass.

For forming a thermoplastic material into a thin-gauge moulded article having a thickness of 700 µm or less and a sufficient area, melt-extrusion processes such as the T-die process, inflation process, calender roll process and hot press process are adopted. Injection moulding has merit in that it easily gives a product of constant shape and constant quality, but injection moulding is inferior in flow characteristics. That is, further than 20 mm from the injection moulding gate along the flow line the resin is not readily flowable, so that a thin-gauge article having a sufficient extent is difficult to obtain when the thickness is 700 µm or less. With the aim of obtaining such articles a variety of measures including (1) lowering the molecular weight of the resin, (2) elevating the temperature of the resin, (3) increasing the pressure of injection, and (4) increasing the speed of injection have been tried.

As transparent resins for optical use, polymethyl methacrylate resin (PMMA) and polycarbonate resin (PC) are mainly used. If the molecular weight is lowered, the resin temperature raised or the pressure or speed of injection increased with the aim of injection-moulding these PMMA and PC resins into an article having a thickness of 700 µm or less and a sufficient extent, there arise various problems such as decrease in the strength of moulded article due to deterioration caused by shearing heat, appearance of turbidity in moulded article and coloration of the moulded article. At the present time, accordingly, thin-gauge articles of transparent optical resin are not in fact manufactured by injection moulding. Furthermore, PMMA is inferior in water-absorbing property and heat resistance, while PC is insufficient in water-absorbing property and high in birefringence.

In recent years, thermoplastic saturated norbornene type resins are watched with interest as a material suitable for production of optically uniform sheets, because their moisture absorption is 0.05% or below, usually 0.01% or below, demonstrating excellence in moisture resistance, and their photoelastic constant is as small as 3 - 9 X 10⁻¹³ cm²/dyne. It is known that sheets or thin-gauge moulded products of constant thickness can be produced from these resins by melt-extrusion process, calendering process, hot press process and the like.

In an information recording element substrate, the irregularity in thickness of the sheet must be at most ±30 µm and preferably at most ±15 µm as measured over the whole area. In an information displaying element substrate, an irregularity in thickness of such an extent can cause distortion of image, and therefore the irregularity in thickness in such a sheet must not exceed ±10 µm, preferably at most ±5 µm and more preferably at most ±2 µm as measured over the whole area. In an information recording element substrate, fine grooves smaller than 1 µm are usually formed for determining the position of information recording and for making the input and output of information exact. In such an element, exactness of the shape of grooves is important but also smoothness of the groove-free flat part and superficial part. In the groove-free part and superficial part, the surface roughness must be at most 0.1 µm, preferably at most 0.07 µm and more preferably at most 0.03 µm as expressed in terms of maximum height Rmax.

When a thermoplastic saturated norbornene type resin is formed into a sheet by T die method, inflation method, calender roll method or the like, it is difficult to simultaneously satisfy the two conditions described above regarding uniformity of thickness and smoothness of surface. They may be satisfied when the resin is formed by a solution casting method, but this method has a problem in that efficiency of production is not good and solvent is apt to remain and lower the strength. Furthermore the residual solvent slowly vaporizes, making the dimensions unstable.

Solution casting has been unable to produce a sheet having the groove-form structure used in information recording element substrates.

Our EP-A-405843 (covered by the preamble of claim 1) describes the injection moulding of optical discs from thermoplastic saturated norbornene-type resin of the hydrogenated type, having a number average molecular weight (as measured by HPLC) in the range 20000 to 50000. The discs in the examples were 1200 µm thick. Example 6 of the document describes injection moulding annular disc spacers 400 µm thick, with radial flow paths of 2.5 mm and 10.5 mm for the thin portion.

Saechtling's "Kunststoff Taschenbuch" (Carl Hanser Verlag), in the section relating to moulded parts, observes in general terms that easily-flowing moulding compositions may be injection mouldable down to 400 µm thickness at a length:thickness ratio up to 250:1, at the risk of molecular orientation phenomena.

The object of this invention consists in providing a transparent resin moulded article for optical use, excellent in water resistance, moisture resistance and transparency, low in birefringence, excellent in surface smoothness, small in irregularity of thickness and sufficient in strength and dimensional stability, and which has a thin-gauge part having a thickness of 700 µm or less and extending to a span of 25 mm or above along the flow line from the gate.

We have found that a thermoplastic saturated norbornene type resin is excellent in flow characteristics, so that the resin is excellent in injection-mouldability into a thin-gauge article and the above-mentioned object can be achieved by injection-moulding such a resin.

In a first aspect the invention provides an article of thermoplastic saturated norbornene-type resin having a standard polystyrene-converted number average molecular weight, as measured by GPC using toluene solvent, in the range 10000 to 80000, and comprising or consisting of a thin-gauge part 700 µm or less in thickness, wherein the article is an injection-moulded article and characterised in that said thin-gauge part extends at least 25 mm in a direction corresponding to the injection moulding gate.

The article may be a substrate for an information medium element, and such substrates and information medium elements based on them are further aspects of the invention.

A further aspect of the invention is a method of making an article of thermoplastic saturated norbornene-type resin having a standard polystyrene-converted number average molecular weight, as measured by GPC using toluene solvent, in the range 10000 to 80000, and comprising or consisting of a thin-gauge part 700µm or less in thickness, comprising injection moulding the article to form said thin-gauge part extending at least 25mm in the moulding flow direction from the injection moulding gate.

Particular embodiments of the invention are disclosed in the dependent claims.

### Thermoplastic Saturated Norbornene Type Resin

As the thermoplastic saturated norbornene type resins usable in this invention, those disclosed in JP-A-3/14882, 3/122137 and 4/63807 can be referred to, e.g. hydrogenated products of ring-opened polymers of norbornene type monomers, addition polymers of norbornene type monomers, addition copolymers of a norbornene type monomer and an α-olefin and the like. Mixtures of two or more kinds of norbornene type monomer are also usable. The methods of polymerization and hydrogenation are not particularly limited, but conventional methods may be adopted.

As the norbornene type monomer, the known monomers disclosed in the above-mentioned JP-A- documents and in JP-A-2/227424 and 2/276842 can be referred to, e.g. norbornene; alkyl-, alkylidene-, and aromatic substituted derivatives thereof, and compounds prepared by substituting these substituted or unsubstituted olefins with a polar group such as halogen, hydroxyl group, ester group, alkoxy group, cyano group, amido group, imido group, silyl group and the like. Examples of such norbornene type monomer include 2-norbornene, 5-methyl-2-norbornene, 5,5-dimethyl-2-norbornene, 5-ethyl-2-norbornene, 5-butyl-2-norbornene, 5-ethylidene-2-norbornene, 5-methoxycarbonyl-2-norbornene, 5-cyano-2-norbornene, 5-methyl-5-methoxycarbonyl-2-norbornene, 5-phenyl-2-norbornene, 5-phenyl-5-methyl-2-norbornene, 5-hexyl-2-norbornene, 5-octyl-2-norbornene, 5-octadecyl-2-norbornene and the like; monomers prepared by adding one or more cyclopentadiene units to norbornene; derivatives or substituted products of these compounds which have been derived or substituted in the same manner as above such as 1,4:5,8-dimethano-1,2,3,4,4a,5,8,8a-octahydro-2,3-dihydrocyclopentadienonaphthalene, 6-methyl-1,4:5,8-dimethano-1,4,4a,5,6,7,8,8a-octahydronaphthalene, 1,4:5,10;6,9-trimethano-1,4,4a,5,6,7,8,8a-octahydronaphthalene, 1,4;5,10;6,9-trimethano-1,2,3,4,4a,5,5a,6,9,9a,10,10a-dodecahydro-2,3-dihydrodicyclopentadienoanthracene and the like; polycyclic monomers which are polymers of cyclopentadiene and derivatives or substituted products thereof which have been derived or substituted in the same manner as above such as dicyclopentadiene (hereinafter referred to as DCP), 2,3-dihydrodicyclo-pentadiene and the like; adducts of cyclopentadiene and tetrahydroindene and the like and derivatives or substituted products thereof which have been derived or substituted in the same manner as above such as 1,4-methano-1,4,4a,4b,5,8,8a,9a-octahydrofluorene, 5,8-methano-1,2,3,4,4a,5,8,8a-octahydro-2,3- cyclopentadienonaphthalene, 4,9:5,8-dimethano-3a,4,4a,5,8,8a,9,9a-octahydro-1H-benzindene (hereinafter referred to as PCDE) and the like; etc.

At the time of subjecting a norbornene type monomer to ring-opening polymerization according to known method, other ring-opening-polymerizable cycloolefins may be used in combination therewith so far as the effect of this invention is not obstructed by the combined use. As specific example of such cycloolefin, compounds having one reactive double bond such as cyclopentene, cyclooctene, 5,6-dihydrodicyclopentadiene and the like can be referred to.

Number average molecular weight of the thermoplastic saturated norbornene type resin used in this invention is 10,000 to 80,000 and preferably 15,000 to 60,000, as measured by GPC (gel permeation chromatography) using a toluene solvent and converted using standard polystyrene. If the number average molecular weight is too low, the moulded article is inferior in mechanical strength. If the number average molecular weight is too high, the resin is not good in flow characteristics and injection moulding of the resin requires elevation of resin temperature; a moulded article having the desired wall thickness is difficult to obtain.

In hydrogenating a ring-opened polymer of a norbornene type monomer, the degree of hydrogenation should be 90% or above, preferably 95% or above, and more preferably 99% or above, from the viewpoint of thermal deterioration resistance and light deterioration resistance.

Glass transition temperature (Tg) which is an index indicating the heat resistance of a resin is measured by DSC (differential scanning calorimetry) method. Tg is preferably 100°C or above, more preferably 120°C or above. A higher Tg means higher heat resistance of the moulded article, which is desirable. However, if Tg is too high, resin temperature must be elevated at the time of injection molding in order to improve the flow characteristics. Accordingly, preferable Tg is 180°C or below. Usually, molecular weight has an important meaning as a determining factor for Tg of resin. In the above-mentioned range of molecular weight, however, molecular weight exercises only a small influence on Tg, and the kind of monomer is more important in determining Tg. Preferably, the kind of monomer should be selected appropriately in the case of homopolymers and copolymerization ratio between the monomers should be selected appropriately in the case of copolymers, to give an appropriate Tg. For example, in the case of hydrogenated product of norbornene type ring-opened homopolymer, preferable monomers generally include polycyclic monomers having 4 or more cyclic units such as 1,4:5,8-dimethano-1,2,3,4,4a,5,8,8a-octahydro-2,3-dihydro-cyclopentadienonaphthalene, 6-methyl-1,4:5,8-dimethano-1,4,4a,5,6,7,8,8a-octahydronaphthalene and the like. In this case, Tg of the hydrogenated product of thermoplastic norbornene type ring-opened polymer is usually about 130°C or above. Generally speaking, Tg of hydrogenated product of norbornene type ring-opened homopolymer becomes higher as the number of cyclic units in monomer increases. Further, Tg of hydrogenated product of norbornene type ring-opened homopolymer is greatly influenced by the kind and number of substituents on the fundamental structure of the polycyclic compound used as a monomer. Care must be taken so that Tg does not reach too high a value.

Similarly, in the case of hydrogenated product of norbornene type ring-opened copolymer, Tg is influenced by the number of cyclic units in the monomer used, the kind of substituent, the composition ratio, etc. As preferable examples of the combination of monomers, combinations of two or more kinds of norbornene type monomers including a polycyclic monomer having 4 or more cyclic units, for example, a combination of a bicyclic monomer such as 2-norbornene, 5-ethyl-2-norbornene or the like or/and a tricyclic monomer such as dicyclopentadiene, 2,3-dihydrodicyclopentadiene or the like and a polycyclic monomer having 4 or more cyclic units, a combination of a plurality of polycyclic monomers having 4 or more cyclic units, etc. can be referred to. In the case of hydrogenated products of ring-opened copolymers constituted of about 50-5% by mole of recurring units derived from PCDE and a residual quantity of recurring units derived from DCP, Tgs are in the range of from a little lower than 180°C to about 110°C, respectively.

### Additives of Agents to be Mixed

If desired, additives such as an anti-aging agent (phenolic compounds, phosphorus compounds and the like), a thermal deterioration preventer such as phenolic compounds and the like, an ultraviolet stabilizer such as benzophenone compounds and the like, an antistatic agent such as amine compounds and the like, a lubricant such as esters of aliphatic alcohols, partial esters or partial ethers of aliphatic alcohols and the like, may be added to the thermoplastic saturated norbornene type resin used in this invention.

Further, other transparent resin may be mixed into the thermoplastic saturated norbornene type polymer of this invention, so far as the object of this invention is not affected. As the transparent resin, PMMA, PC, polystyrene resin and the like can be referred to. For moulded articles requiring no transparency, a variety of fillers may be added for the purpose of improving strength.

### Injection Moulding

For obtaining the moulded article of this invention, a usual injection moulding machine of which. clamping pressure is about 40 tons or above can be used. Conventional injection pressure and injection speed conditions for the injection moulding machine to be used may be adopted, while injection moulding temperature should be decided with consideration of the flow characteristics of the polymer. Usually, the moulding is carried out at 280-360°C, and preferably at a relatively high resin temperature of 290-350°C. If the resin temperature is too low, flow characteristics are not good and a moulded article is difficult to obtain. If the resin temperature is too high, thermal deterioration takes place causing various problems such as reduction in the strength of the moulded article and coloration.

Usually, injection of resin is carried out at a die temperature of from 70°C to Tg+10°C, preferably from 90°C to Tg+5°C. If the die temperature at the time of injection is too low, the injected resin is rapidly cooled in the die and its solidification is promoted, so that flow characteristics of resin are deteriorated. Depending on the structure of the die, the resin cannot be fully filled into corners of the die, and the intended molded product is difficult to obtain. If the die temperature is too high, the die must be allowed to cool sufficiently after completion of injection in order to solidify the resin, which usually leads to a decrease in production efficiency. When molding is carried out at a die temperature falling in a range of from Tg-20°C to Tg+10°C and particularly from Tg-10°C to Tg+10°C, it is generally preferable to sufficiently lower the die temperature after completion of injection. For sufficiently lowering the die temperature, a means of presetting a long die-cooling period after completion of injection, etc. may be adopted. When the die temperature after completion of injection is higher than Tg, it is also allowable to preset the die temperature so as to change in accordance with a molding cycle. As above, the die temperature at the time of injection should be decided with consideration of flow characteristics of resin on the basis of die structure, resin temperature, Tg of resin, necessary cooling period of die, production efficiency, etc.

Generally speaking, after completion of injection, solidification of the resin starts from the peripheral zone. Thus, the resin solidifies while undergoing a stress from the firstly solidified peripheral zone to the inner zone. As its result, a residual stress appears, due to which birefringence increases. In the moulded article of this invention, by contrast the whole of the thin-gauge part having a thickness of 700 µm or less solidifies nearly at once, without substantial difference between the peripheral zone and inner zone, so that a great residual stress does not appear readily. Even if there is a great residual stress, birefringence of a thermoplastic saturated norbornene type resin cannot readily take a great value because the magnitude of birefringence is dependent on the product of residual stress and photoelastic constant. Thermoplastic saturated norbornene type resins have a small photoelastic constant.

The surface of the die used for injection moulding must be smooth as a whole. If the surface of the die is not smooth, no moulded article having a smooth surface can be obtained. If necessary, grooves are formed on one side of the die. When grooves are formed, it is necessary that the areas other than the grooves have no irregularities of 1 µm or greater at all. For this purpose, the surface of die must previously be made as smooth as possible. As the techniques for processing a die and a stamper, the prior processing techniques for dies for information recording discs can be adopted directly.

### Injection Moulded Articles

The moulded article of this invention has a thin-gauge part having a prescribed thickness and extending to a span of 25 mm or above, preferably 30 mm or above, and further preferably 40 mm or above along the flow line from the gate. However, if the article has an area of excessively small thickness, the area is low in strength. Further, an article having an excessively thin area is difficult to produce by injection moulding because the die gap must be too small. Accordingly, it is desired that the thickness in the thinnest area is usually at least 100 µm and preferably at least about 200 µm.

A moulded sheet article of this invention can be used as an information recording element substrate or an information displaying medium element substrate. In the case of information recording element substrate, the irregularity in thickness of the sheet must be ±30 µm or less, preferably ±15 µm or less, on the whole surface. In the case of information displaying element substrate, an irregularity of such an extent is enough to cause distortion of image. Therefore, when a particularly precise image is required, the irregularity in thickness of the sheet must be ±10 µm or less, preferably ±5 µm or less, and more preferably ±2 µm or less over the whole surface. In an information recording element, minute grooves for deciding the position of information record having a size of smaller than 1 µm, called "grooves", are usually formed. In an information displaying element, reflection must be prevented. For these reasons, smoothness of surface is also important, and the maximum height (Rmax) must be 0.1 µm or less, preferably 0.07 µm or less, and more preferably 0.03 µm or less. When the sheet is used as an information displaying medium element substrate the situation is similar to the above. These injection moulded articles required to have a high surface precision can be obtained by sufficient grinding of the surface of the die used in the injection moulding process. Dies which have been ground and thereafter made to have a further surface smoothness by means of chromium plating or the like are particularly preferred.

The birefringence is small in the thin-gauge part having a thickness of 700 µm or less. Usually, the greatest value of birefringence throughout the whole surface is 40 nm or less, preferably 30 nm or less, and particularly preferably 20 nm. To make birefringence as small as possible, it is recommendable to select a combination of die temperature and resin temperature so as to minimize the residual stress, depending on the shape of the die etc.

Since the injection-moulded article is made of a thermoplastic saturated norbornene type resin excellent in transparency, an article having a light transmittance of 90% or above can easily be obtained. For enhancing the light transmittance, it is recommendable to use an impurity-free thermoplastic saturated norbornene type resin while taking care to eliminate fine flaws of the surface causing irregular reflection, and at the same time to decrease the maximum height Rmax, namely an index of surface roughness. For this purpose, it is recommendable to use a die which has been ground and chromium-plated in the above-mentioned manner.

Since the injection-moulded article is made of a thermoplastic saturated norbornene type resin low in moisture absorbing property, its saturated moisture absorption after standing in water at 25°C for 24 hours is usually 0.1% or less, preferably 0.05% or less, and particularly preferably 0.01% or less.

The injection-moulded article is excellent in heat resistance and shows no noticeable change in color tone and no heat distortion even if heated at 100°C. Further, since the injection moulding process uses no solvent (unlike solution casting processes) the quantity of solvent remaining in the molded article is as small as usually 0.1% or less, preferably 0.05% or less and more preferably 0.01% or less. Thus, it undergoes scarcely any distortion due to vaporization of solvent even if used in a high-temperature atmosphere, and it exercises substantially no adverse influence on the environment due to vaporized solvent.

Since the article is formed by the injection moulding process, it is possible to make one moulded article involve a structure for bonding to other parts, or a structure of different function, in addition to the thin-gauge part. In parts other than the thin-gauge part the thickness may exceed 700 µm.

A sheet embodying this invention can be used as an information recording element substrate in which grooves are formed on a circular sheet having a size of 80-90 mmΦ or 120-130 mmΦ, or as an information displaying medium element substrate which is a rectangular or square sheet having a diagonal length in the range 25 to 254 mm (1 to 10 inches).

### Information Recording Element

To use the moulded article as an information recording element substrate, an information recording layer must be provided on the grooved surface. As the information recording layer, the following can be referred to: known rare earth-transition metal amorphous alloys such as Tb-Fe type, Dy-Fe type, Cd-Tb-Fe type, Cd-Tb-Dy-Fe type, Cd-Co type, Tb-Fe-Co type and the like; a variety of known phase change type recording layers such as Ge-Te type, Sb-Te type, In-Sb type, Ge-Sb-Te type, In-Sb-Te type and the like; known organic dye type recording layers such as methine-polymethine type, quinones (naphthoquinone, anthraquinone and the like), phthalocyanines, dithiols, tetrahydrocholines, dioxanes, dithiazines, porphyrins and the like; known write-once type recording layers such as Te-CS₂ type, Pb-Te-Se type, Te-C type, TeO₂ type, Sb-Se type, Bi-Te type and the like and postscript type recording layers using the shape change caused by bubble formation; metallic light reflecting layers such as Au, Pt, Al and the like; and light reflecting layers capable of reflecting only particular wavelengths in which SiO₂, metal oxide, metal fluoride and the like are laminated to a specified thickness to form a multi-layer structure.

### Liquid Crystal Substrate

The moulded article can be used as an information displaying medium element substrate such as a liquid crystal substrate. Of the two sheets of liquid crystal substrates used as constructing parts of a liquid crystal display, at least one must be laminated with a transparent electrode layer. The transparent electrode layer must have at least a certain magnitude of light transmittance to visible light. The light transmittance is usually 50% or more and preferably 70% or more; and specific resistance is usually 100 Ωcm or less and preferably 50 Ωcm or less. Specifically, thin film of metals such as Au, Ag, Cu ,Pt, Al, Cr, Pd and the like, thin film of semi-conductors and oxide semi-conductors such as In₂O₃(Sn), SnO₂(Sb), SnO₂(Fe), CdO, Cd₂O₃, CdSnO₄, TiO₂, ZrO₂, CuI and the like, multi-layer thin films such as TiOₓ/Ag/TiOₓ (x ≤ 2) and the like, poly-electrolyte thin film systems such as polyvinylbenzyl-trimethylammonium chloride, oligo- (poly)styrenesulfonic acid salt and the like, electrically conductive polymers such as polyanilines, polythiophenes, polypyrroles and the like can be referred to. These conductive films are laminated on a liquid crystal substrate according to a known method such as spraying method, plasma method, gas phase reaction system (CVD), coating method (CLD), vacuum vapor deposition method, RF or DC sputtering method, ion plating method, electrolytic polymerization method or the like. It is also possible to give the thin film an electroconductivity by impregnating the film with a complex compound such as TTF-TCNQ (tetrathio-fulvalene/tetracyanoxydimethane) or the like.

Hereinunder, this invention is explained more concretely by referring to referential example, examples and comparative example.

### Example 1

To 100 parts by weight of a polymer (number average molecular weight 28,000, hydrogenation rate approximately 100%, glass transition temperature 152°C) obtained by hydrogenating a ring-opened polymer of 6-methyl-1,4:5,8-dimethano-1,4,4a,5,6,7,8,8a-octahydronaphthalene (MTD) was added 0.2 part by weight of pentaerythrityl-tetrakis(3-(3,5-di-tert-butyl-4-hydroxyphenyl)propionate) as a phenolic anti-aging agent, and the resulting mixture was pelletized by the method of melt extrusion.

The pellets were injection-moulded under the following conditions to obtain a thin-gauge moulded article.
- Die:: 90 mm × 55 mm × 500 µm thickness × two-impression; with a surface ground and smoothly finished by chromium plating; with a slit-form gate having a size of 90 mm × 500 µm from which resin is injected perpendicularly.
- Molding machine:: Clamping pressure 85 tons.
- Resin temperature:: 325°C.
- Die temperature:: 110°C (fixed side), 100°C (movable side).

The moulded product thus obtained was subjected to various tests to obtain the results mentioned below.
- Appearance:: The moulded product has a size of 90 mm × 55 mm × 500 µm. This size was just equal to that of the die.
- Warpage:: The moulded product was placed on a flat plate, and the warpage was visually examined by the use of Newton rings. The warpage was at most 50 µm.
- Irregularity in thickness:: The irregularity did not exceed ±1 µm over the whole area of the sheet, except for the peripheral zone of 5 mm width.
- Minute unevenness:: Measured with a surface roughness-meter. The result was 25 nm or less expressed as Rmax.
- Transparency:: The color tone was transparent visually, and the light transmittance was 90% or above in the whole visible light region.
- Birefringence:: Measured by double paths at a wavelength of 633 nm. The birefringence was at most 20 nm over the whole area of sheet.
- Residual solvent:: Gas chromatography revealed that the quantities of residual solvents were below the limit of detection (0.01%).
- Moisture absorbing property:: After allowing the moulded product to stand in water at 25°C for 24 hours, the saturated moisture absorption was determined from the increase in weight. The result was 0.01% or less. The warpage after standing for 24 hours was 50 µm or less, and no great moisture-absorbing distortion was noticeable.
- Heat resistance:: After heating the moulded product in air oven at 100°C, no change was noticeable in color tone. The warpage was still 50 µm or less, and no great heat distortion was noticeable.

### Example 2

The same anti-aging agent as in Example 1 was added to 100 parts by weight of a hydrogenated product (number average molecular weight 27,000, rate of hydrogenation approximately 100%, glass transition temperature 133°C) of a copolymer obtained by ring-opening polymerization of a MTD/dicyclopenta-diene (DCPD) mixture (MTD/DCPD = 70/30 by mole), and the resulting mixture was pelletized.

The pellet was injection-moulded under the following conditions to obtain the results mentioned below.
- Die:: 90 mmΦ × 350 µm thickness × one-impression; equipped on its surface with a stamper partially grooved in the same manner as those used in the information recording disks; the size of the groove was 600 nm (width) × 85 nm (depth).
- Molding machine:: Clamping pressure 65 tons.
- Resin temperature:: 335°C.
- Die temperature:: 110°C (fixed side), 100°C (movable side).

The moulded product thus obtained was subjected to various tests to obtain the results mentioned below.
- Appearance:: The moulded product had a size of 90 mmΦ × 350 µm thickness. This size was just equal to that of the die.
- Warpage:: The moulded product was placed on a flat plate, and the warpage was visually examined by the use of Newton rings. The warpage was at most 50 µm.
- Irregularity in thickness:: The irregularity did not exceed ±1 µm over the whole area of the sheet, except for the peripheral zone of 5 mm width.
- Minute unevenness:: Measured with a surface roughness-meter. The result was 20 nm or less expressed as Rmax.
- Transparency:: The color tone was transparent visually, and the light transmittance was 90% or above in the whole visible light region.
- Birefringence:: Measured by double paths at a wavelength of 633 nm. The birefringence was at most 20 nm over the whole area of sheet.
- Residual solvent:: Gas chromatography revealed that the quantities of residual solvents were below the limit of detection (0.01%).
- Moisture absorbing property:: After allowing the moulded product to stand in water at 25°C for 24 hours, the saturated moisture absorption was determined from the increase in weight. The result was 0.01% or less. The warpage was 50 µm or less, and no great moisture-absorbing distortion was noticeable.
- Heat resistance:: After heating the moulded product in air oven at 100°C, no change was noticeable in color tone. The warpage was still 50 µm or less, and no great heat distortion was noticeable.
- Groove transferability:: The formed grooves had a depth of 78 nm or above.

### Comparative Example 1

After preliminarily drying PC (manufactured by Teijin Kasei, trade name AD5503) in an air oven at 120°C for 4 hours, injection moulding thereof was attempted in the same manner as in Example 1. However, the moulded product did not take the intended shape; the resin could be filled only to a distance of about 10 mm from the gate.

Next, the resin temperature was elevated to 350°C, and moulding was attempted at an enhanced injection speed. However, the resin was decomposed by the shearing heat and a white-colored moulded product was obtained.

The moulded article of this invention is constituted of a thermoplastic saturated norbornene type resin. By injection moulding such a resin, a moulded article which has a thin-gauge part having a thickness of 700 µm or less and extending to a span of 25 mm along the flow line from the gate can be easily obtained with a constant shape and constant quality. When the thin-gauge part is a sheet, a sheet small in the irregularity of thickness can be obtained. Further, by using a sufficiently ground die, a moulded article excellent in surface smoothness can be obtained.

Further, the moulded article is free from the distortion due to vaporization of the solvent remaining in the resin and from the resulting adverse influence on the environment. The moulded article is excellent in moisture resistance and heat resistance. In addition the thin-gauge part is low in birefringence and high in transparency.

## Claims

1. An article of thermoplastic saturated norbornene-type resin having a standard polystyrene-converted number-average molecular weight, as measured by GPC using toluene solvent, in the range 10000 to 80000, and comprising or consisting of a thin-gauge part 700µm or less in thickness, wherein the article is an injection-moulded article and characterised in that said thin-gauge part extends at least 25mm in a direction corresponding to the moulding flow direction from a position corresponding to the injection moulding gate.

2. An article according to claim 1 which is a transparent optical article.

3. An article according to claim 1 or claim 2 in which the thin-gauge part is in sheet form.

4. An article according to claim 3 in which the thin-gauge part has a constant thickness whose irregularity is not more than ± 30µm.

5. An article according to any one of the preceding claims in which the thin-gauge part has a birefringence not more than 40nm.

6. An article according to any one of the preceding claims in which the thin-gauge part has a surface roughness value Rmax not more than 0.1µm.

7. An article according to any one of the preceding claims in which the thin-gauge part extends at least 40mm in said flow direction.

8. An article according to any one of the preceding claims in which the thin-gauge part is at least 200µm thick.

9. An article according to any one of the preceding claims in which said number average molecular weight is in the range 15000 to 60000.

10. An article according to any one of the preceding claims in which the resin has a Tg in the range 120°C to 180°C.

11. An article according to claim 3, or any one of claims 4 to 10 as dependent on claim 3, which is a substrate for an information medium element.

12. An article according to claim 11 which is a substrate for an information recording element.

13. An article according to claim 12 which is a circular sheet of 80 to 90mm or 120 to 130mm diameter formed with a recording location groove.

14. An article according to claim 12 or claim 13 in which the thin-gauge part has a thickness irregularity not more than ± 15µm.

15. An article according to claim 11 which is a substrate for an information display element.

16. An article according to claim 15 which is a square or rectangular sheet having a diagonal length in the range 25 to 254mm (1 to 10 inches).

17. An article according to claim 15 or claim 16 in which the thin-gauge part has a thickness irregularity not more than ± 5µm.

18. An article according to any one of claims 15 to 17 in which the thin-gauge part has a surface roughness value Rmax not more than 0.03µm.

19. An information medium element comprising as a substrate an article in accordance with any one of claims 11 to 18, and which is
(a) an information recording element having an information recording layer formed on the substrate surface, or
(b) an information display element.

20. An information medium element according to claim 19 which is an optical disc or photo memory card.

21. An information medium element according to claim 19 which is a liquid crystal display.

22. A method of making an article of thermoplastic saturated norbornene-type resin having a standard polystyrene-converted number average molecular weight, as measured by GPC using toluene solvent, in the range 10000 to 80000, and comprising or consisting of a thin-gauge part 700µm or less in thickness, comprising injection moulding the article to form said thin-gauge part, characterised in that said part extends at least 25mm in the moulding flow direction from the injection moulding gate.

23. A method according to claim 22 in which the moulding is done at a resin temperature in the range 280 to 360°C.

24. A method according to claim 22 or claim 23 in which the injection moulding die temperature during injection is in the range from 70°C to Tg + 10°C, Tg being the glass transition temperature of said resin.

25. A method according to any one of claims 22 to 24 comprising forming the article in accordance with any one of claims 2 to 18.

## Patentansprüche

1. Gegenstand aus einem thermoplastischen, gesättigten Harz des Norbornentyps, das ein auf ein Standardpolystyrol bezogenes, durch GPC unter Verwendung von Toluol als Lösungsmittel bestimmtes Zahlenmittel des Molekulargewichts in einem Bereich von 10000 bis 80000 aufweist, der einen dünnwandigen Teil von höchstens 700 µm Dicke umfaßt, oder daraus besteht, wobei der Gegenstand ein spritzgegossener Gegenstand ist, dadurch gekennzeichnet, daß sich der dünnwandige Teil in einer der Fließrichtung des Gießens entsprechenden Richtung über mindestens 25 mm von einer dem Spritzgußaustrittsspalt entsprechenden Position erstreckt.

2. Gegenstand nach Anspruch 1, der ein transparenter optischer Gegenstand ist.

3. Gegenstand nach Anspruch 1 oder Anspruch 2, wobei der dünnwandige Teil in Form einer Folie vorliegt.

4. Gegenstand nach Anspruch 3, wobei der dünnwandige Teil eine konstante Dicke, deren Ungleichförmigkeit nicht mehr als ±30 µm ist, aufweist.

5. Gegenstand nach einem der vorstehenden Ansprüche, wobei der dünnwandige Teil eine Doppelbrechung von nicht mehr als 40 nm aufweist.

6. Gegenstand nach einem der vorstehenden Ansprüche, wobei der dünnwandige Teil einen Oberflächenrauhigkeitswert Rmax von nicht mehr als 0,1 µm aufweist.

7. Gegenstand nach einem der vorstehenden Ansprüche, wobei der dünnwandige Teil sich mindestens über 40 mm in Fließrichtung erstreckt.

8. Gegenstand nach einem der vorstehenden Ansprüche, wobei der dünnwandige Teil mindestens 200 µm dick ist.

9. Gegenstand nach einem der vorstehenden Ansprüche, wobei das Zahlenmittel des Molekulargewichts in dem Bereich von 15000 bis 60000 liegt.

10. Gegenstand nach einem der vorstehenden Ansprüche, wobei das Harz eine Tg im Bereich von 120°C bis 180°C aufweist.

11. Gegenstand nach Anspruch 3 oder nach einem der von Anspruch 3 abhängigen Ansprüche 4 bis 10, welcher ein Substrat für ein Informationsträgerelement ist.

12. Gegenstand nach Anspruch 11, der ein Trägermaterial für ein Informationsaufzeichnungselement ist.

13. Gegenstand nach Anspruch 12, der eine kreisförmig geformte Folie mit einem Durchmesser von 80 bis 90 mm oder 120 bis 130 mm und mit einer Schreibstellenvertiefung ist.

14. Gegenstand nach Anspruch 12 oder Anspruch 13, wobei der dünnwandige Teil eine Ungleichförmigkeit in der Dicke von nicht mehr als ±15 µm aufweist.

15. Gegenstand nach Anspruch 11, der ein Trägermaterial für ein Informationsanzeigeelement ist.

16. Gegenstand nach Anspruch 15, der eine quadratische oder rechteckige Folie mit einer Diagonalenlänge im Bereich von 25 bis 254 mm (1 bis 10 inches) ist.

17. Gegenstand nach Anspruch 15 oder Anspruch 16, wobei der dünnwandige Teil eine Ungleichförmigkeit in der Dicke von nicht mehr als ±5 µm aufweist.

18. Gegenstand nach einem der Ansprüche 15 bis 17, wobei der dünnwandige Teil einen Oberflächenrauhigkeitswert Rmax von nicht mehr als 0,03 µm aufweist.

19. Informationsträgerelement, umfassend als Substrat einen Gegenstand gemäß einem der Ansprüche 11 bis 18, und das
(a) ein Informationsaufzeichnungselement mit einer auf der Oberfläche des Substrats geformten Informationsaufzeichnungsschicht, oder
(b) ein Informationsanzeigeelement ist.

20. Informationsträgerelement nach Anspruch 19, das eine Bildplatte (optical disc) oder eine Photospeicherkarte (photo memory card) ist.

21. Informationsträgerelement nach Anspruch 19, das eine Flüssigkristallanzeige ist.

22. Verfahren zur Herstellung eines Gegenstandes aus einem thermoplastischen, gesättigten Harz des Norbornentyps, das ein auf ein Standardpolystyrol bezogenes, durch GPC unter Verwendung von Toluol als Lösungsmittel bestimmtes Zahlenmittel des Molekulargewichts im Bereich von 10000 bis 80000 aufweist, der einen dünnwandigen Teil von höchstens 700 µm Dicke umfaßt oder daraus besteht, umfassend Spritzgießen des Gegenstandes, um den dünnwandigen Teil zu formen, dadurch gekennzeichnet, daß sich dieser Teil vom Spritzgußaustrittsspalt über mindestens 25 mm in der Fließrichtung des Gießens erstreckt.

23. Verfahren nach Anspruch 22, wobei der Spritzguß bei einer Harztemperatur im Bereich von 280 bis 360°C durchgeführt wird.

24. Verfahren nach Anspruch 22 oder Anspruch 23, wobei die Spritzgußdüsentemperatur während des Spritzens im Bereich von 70°C bis Tg + 10°C liegt, wobei Tg die Glasübergangstemperatur des Harzes ist.

25. Verfahren nach einem der Ansprüche 22 bis 24, umfassend das Formen eines Gegenstandes gemäß einem der Ansprüche 2 bis 18.

## Revendications

1. Article en résine thermoplastique saturée à base de norbornène présentant une masse moléculaire moyenne en nombre exprimée par rapport à un étalon polystyrène, telle que mesurée par CPG avec un solvant de type toluène, qui se situe dans l'intervalle allant de 10 000 à 80 000, et comprenant ou étant constitué d'une partie mince de 700 µm ou moins d'épaisseur, l'article étant un article moulé par injection et caractérisé en ce que ladite partie mince s'étend sur au moins 25 mm dans une direction correspondant à la direction d'écoulement de moulage à partir d'une position correspondant à l'entrée en moulage par injection.

2. Article selon la revendication 1, qui est un article optique transparent.

3. Article selon la revendication 1 ou 2, dans lequel la pièce mince se trouve sous forme de feuille.

4. Article selon la revendication 3, dans lequel la partie mince présente une épaisseur constante dont l'irrégularité ne dépasse pas ± 30 µm.

5. Article selon l'une quelconque des précédentes revendications, dans lequel la partie mince présente une biréfringence ne dépassant pas 40 nm.

6. Article selon l'une quelconque des précédentes revendications, dans lequel la partie mince présente une valeur de rugosité de surface Rmax ne dépassant pas 0,1 µm.

7. Article selon l'une quelconque des précédentes revendications, dans lequel la partie mince s'étend sur au moins 40 mm dans ladite direction d'écoulement.

8. Article selon l'une quelconque des précédentes revendications, dans lequel la partie mince présente une épaisseur d'au moins 200 µm.

9. Article selon l'une quelconque des précédentes revendications, dans lequel ladite masse moléculaire moyenne en nombre se situe dans l'intervalle allant de 15 000 à 60 000.

10. Article selon l'une quelconque des précédentes revendications, dans lequel la résine présente une Tg se situant dans l'intervalle allant de 120 °C à 180 °C.

11. Article selon la revendication 3, ou selon l'une quelconque des revendications 4 à 10 telle que dépendante de la revendication 3, qui est un substrat pour un élément de support d'informations.

12. Article selon la revendication 11, qui est un substrat pour un élément d'enregistrement d'informations.

13. Article selon la revendication 12, qui est une feuille circulaire présentant un diamètre de 80 à 90 mm ou de 120 à 130 mm, formée avec un sillon de situation de l'enregistrement.

14. Article selon la revendication 12 ou 13, dans lequel la partie mince présente une irrégularité d'épaisseur ne dépassant pas ± 15 µm.

15. Article selon la revendication 11, qui est un substrat pour un élément de visualisation d'informations.

16. Article selon la revendication 15, qui est une feuille carrée ou rectangulaire présentant une longueur de diagonale compris dans l'intervalle allant de 25 à 254 mm (1 à 10 pouces).

17. Article selon la revendication 15 ou 16, dans lequel la partie mince présente une irrégularité d'épaisseur ne dépassant pas ± 5 µm.

18. Article selon l'une quelconque des revendications 15 à 17, dans lequel la partie mince présente une valeur de rugosité de surface Rmax ne dépassant pas 0,03 µm.

19. Elément de support d'informations comprenant, en tant que substrat, un article selon l'une quelconque des revendications 11 à 18, et qui est :
(a) un élément d'enregistrement d'informations présentant une couche d'enregistrement d'informations formée sur la surface du substrat, ou
(b) un élément de visualisation d'informations.

20. Elément de support d'informations selon la revendication 19, qui est un disque optique ou une carte de photomémoire.

21. Elément de support d'informations selon la revendication 19, qui est un système de visualisation à cristaux liquides.

22. Procédé de fabrication d'un article en résine thermoplastique saturée à base de norbornène présentant une masse moléculaire moyenne en nombre exprimée par rapport à l'étalon polystyrène, telle que mesurée par CPG avec un solvant de type toluène, qui se situe dans l'intervalle allant de 10 000 à 80 000, et comprenant ou étant constitué d'une partie mince de 700 µm ou moins d'épaisseur, comprenant le moulage par injection de l'article pour former ladite partie mince, caractérisé en ce que ladite partie s'étend sur au moins 25 mm dans la direction d'écoulement du moulage depuis l'entrée en moulage par injection.

23. Procédé selon la revendication 22, dans lequel on effectue le moulage à une température de résine qui se situe dans l'intervalle allant de 280 à 360 °C.

24. Procédé selon la revendication 22 ou 23, dans lequel la température de la filière de moulage par injection se situe, au cours de l'injection, dans l'intervalle allant de 70 °C à Tg + 10 °C, Tg étant la température de transition vitreuse de ladite résine.

25. Procédé selon l'une quelconque des revendications 22 à 24, comprenant la formation de l'article selon l'une quelconque des revendications 2 à 18.
